# EUROPEAN PATENT SPECIFICATION

(11) **EP 4 609 670 B1**
(45) Date of publication and mention of the grant of the patent: **25.03.2026**
(21) Application number: 24701545.6
(22) Date of filing: 16.01.2024
(51) Int. Cl.: H05B 7/144, H02M 5/458, H02M 1/42, H02M 5/45

(54) **ELECTRIC ARC FURNACE POWER SUPPLY SYSTEM FOR AN AC ELECTRIC ARC FURNACE**
STROMVERSORGUNGSSYSTEM FÜR EINEN ELEKTRISCHEN LICHTBOGENOFEN FÜR EINEN WECHSELSTROMLICHTBOGENOFEN
SYSTÈME D'ALIMENTATION ÉLECTRIQUE DE FOUR À ARC ÉLECTRIQUE POUR FOUR À ARC ÉLECTRIQUE À COURANT ALTERNATIF

(43) Date of publication of application: 03.09.2025
(73) Proprietor: ABB Schweiz AG, 5400 Baden (CH)
(72) Inventor: STADLER, Raeto, 8135 Langnau am Albis (CH); VIJAYAKUMAR, Nandhakumar, 5415 Nussbaumen (CH); KIEFERNDORF, Frederick, 5400 Baden (CH); MARAIS, Charl, 1692 Centurion, Midstream (ZA)
(74) Representative: Zimmermann & Partner Patentanwälte mbB
(86) International application number: PCT/EP2024/050912
(87) International publication number: WO 2025/153172

(56) References cited:
- WO-A1-2018/233833
- CN-A- 113 708 649
- CN-A- 114 696 629
- CN-U- 217 483 230
- DE-A1- 102015 221 435
- US-A1- 2007 247 079

## Description

### Field of the disclosure

The invention is in the area of electric arc furnaces to melt steel scrap, iron ore pellets (DRI), direct reduced iron ore fines or lumps, or any other metal containing material that need to be melted. In particular, embodiments of the present disclosure relate to an electric arc furnace power supply system for an AC electric arc furnace having at least 4 electrodes and a method for providing power to an AC electric arc furnace having at least 4 electrodes.

### Technical Background

Electric arc furnaces are used in the manufacture of metal containing materials, for example, iron and steel, particularly from scrap collected for recycling. Known electric arc furnaces, for example AC electric arc furnaces, are provided with 3 electrodes. The AC electric furnaces are connected to the 3 phase AC grid and operated with 3 phases. The arc furnaces, for example the AC electric arc furnaces, are reaching a power level, where it is difficult or even impossible to increase the power provided into the furnace. Technical limitations, especially on the electrical side, prevent an increase in power levels in electric arc furnaces, particularly AC electric arc furnaces, and restrict production output.

The size of the graphite electrodes and the furnace transformer is reaching the limit of what can be manufactured and handled. Thus, the electrical current that can be provided into the furnace is limited. Further, in order to achieve efficient operation, i.e. efficient melting, the arc must be covered or submerged by for example scrap, ore, or foamy slag. The height of foamy slag has come to its limit, and thus the arc voltage cannot be further increased, limiting the power into the furnace. Further, the heat transferred into the furnace is concentrated in the center and colder areas on the circumference of the furnace need longer to melt the material, thus the efficiency is decreased, and the melting time is increased.

The above restrictions limit the furnace in size, power and production output. In order to match existing equipment, for example downstream equipment from a blast furnace, a production output of electric arc furnaces needs to be increased. There is a need for an AC electric arc furnace power supply system, that overcomes the limitations described above.

US 2007/247079 A1 discloses a power supply for an electric arc furnace according prior art and DE 10 2015 2214 35 A1 discloses a power supply according to the preamble of claim 1.

### Summary of the disclosure

Reference will now be made in detail to the various embodiments of the present disclosure, one or more examples of which are illustrated in the figures. Generally, only the differences with respect to individual embodiments are described. Each example is provided by way of explanation and is not meant as a limitation of the present disclosure. Features illustrated or described as part of one embodiment can be used on or in conjunction with other embodiments to yield yet a further embodiment. It is intended that the description includes such modifications and variations.

In light of the above, an electric arc furnace power supply system for an AC electric arc furnace according to claim 1 and a method for providing a power to an AC electric arc furnace according to claim 14 is provided. Further aspects, advantages, and features are apparent from the dependent claims, the description, and the accompanying drawings.

The present application provides an electric arc furnace power supply system for an AC electric arc furnace that overcomes the limitations of the known electric arc furnaces. The present invention solves the above stated problems, particularly allows to increase a power that can be provided into an AC electric arc furnace, by providing an N-phase AC output current. The power supply system according to the present invention provides an N-phase AC output current to N AC output terminals. The respective phases of the N-phase AC output current provided at the N AC output terminals are phase-shifted with respect to each other. At least one electrode can be provided for each of the N output terminals. That is, at least one electrode can be provided for each of the N phases. Advantageously the number of electrodes can be increased. Particularly, the number of electrodes provided in the AC electric arc furnace is independent from an AC electrical grid, e.g. a 3-phase AC electrical grid. For example, 4 or 5 electrodes can be provided to the AC electric arc furnace.

By increasing the number of phases of the AC electric arc furnace, more electrical power can be brought into the furnace. Particularly while maintaining, or even lowering, a current, a voltage, and/or a power provided to each of the electrodes. The electric arc furnace power supply system according to the present application provides an N-phase AC output current to N AC output terminals. Thereby the number of electrodes provided in the electric arc furnace can be increased, for example, the electric arc furnace can be provided with N electrodes. In consideration of the furnace size needed to fit the electrodes into the electric arc furnace, the electric arc furnaces are preferably provided with 4 or 5 electrodes. The limitations of the known electric arc furnaces are overcome by increasing the number of electrodes for example to 4 or 5 electrodes, or even more.

The present application provides a power supply system, particularly a power supply circuitry, that is capable of generating an AC system with N phases, N ≥ 4. For example, 4 or 5 phases. The power supply system allows to power at least 4 electrodes, for example N electrodes, for example 4 or 5 electrodes, each with a different phase of the N-phase AC output current. The advantage of such an electric arc furnace power supply system is, that the power provided into the furnace can be increased while the current, voltage and/or power per electrode can be maintained. The current, voltage and/or power per electrode may also be decreased, to achieve less electrode consumption, i.e. less wear and tear, while simultaneously increasing the power into the furnace, i.e. by having more electrodes. Advantageously, powering an AC electric arc furnace having at least 4 electrodes with the power supply system according to the present invention may increase a lifetime of the at least 4 electrodes and/or a lifetime of a refractory in the furnace. Further, this allows to use smaller electrodes, which are easier to manufacture and handle. Smaller electrodes are also more readily available from suppliers and more cost effective. Further, by having at least 4 electrodes powered by individual phases, the arrangement in the furnace of the electrodes may be chosen very flexibly, particularly freely, to allow for an optimal heat distribution in the furnace according to specific furnace geometry. To support a more beneficial heat distribution, arc deflections can be addressed by geometrical changes in the electrode arrangement.

A power grid providing power to the AC electric arc furnace may be subject to fluctuations, for example fluctuations in a grid current, a grid voltage, and/or a grid power, which can have detrimental effects on the performance of the AC electric arc furnace. Further, the power usage of the electric arc furnace may fluctuate which can impact a supply stability of a power supply system connected to the AC electric arc furnace. The electric arc furnace power supply system for an AC electric arc furnace according to the present invention can compensate fluctuations in the power grid and fluctuations in the power usage of the AC electric arc furnace.

According to the invention, an electric arc furnace power supply system for an AC electric arc furnace, EAF, having at least 4 electrodes is provided. The EAF power supply system includes 3 AC input terminals configured to be connected to a 3-phase AC power grid, N AC output terminals, N ≥ 4, configured to be connected to the at least 4 electrodes, and a power supply circuitry connected to the AC input terminals for receiving a 3-phase AC input current from the power grid via the AC input terminals, and connected to the AC output terminals for providing an N-phase AC output current to the electrodes via the AC output terminals, wherein respective phases of the N-phase AC output current provided at the N AC output terminals are phase shifted with respect to each other.

The AC power grid may be a low voltage (LV) grid, a medium voltage grid (MV), a high voltage grid (HV) or an extra high voltage grid. The 3 AC input terminals may be directly connected to the grid. That is, the 3 AC input terminals may be connected to the grid without a transformer. For example, the 3 AC input terminals may be directly connected to a LV grid or a MV grid. The 3 AC input terminals may be indirectly connected to the grid. The 3 AC input terminals may be connected to the grid through a grid transformer. Particularly, the 3 AC input terminals may be connected to the grid being a LV grid, a MV grid, a HV grid, or an extra high voltage grid through the grid transformer.

The AC power grid may be a 3-phase AC grid. The AC power grid may provide the 3-phase AC input current. The AC power grid may provide the 3-phase AC input current to the 3 AC input terminals. Particularly, the AC power grid may provide a 3-phase input voltage and/or a 3-phase power to the 3 AC input terminals. Each AC input terminal of the 3 AC input terminals may receive a different phase of the 3-phase AC input current. The AC power grid connected, directly or indirectly, to the 3 AC input terminals may have a 3-phase grid voltage, a 3-phase AC grid current, and a 3-phase grid power. The 3-phase AC grid current may correspond to the 3-phase AC input current. Particularly, the 3 phase-grid voltage may correspond to a 3-phase input voltage and/or the 3-phase grid power may correspond to a 3-phase input power. The 3-phase AC input current may be a current received by the 3 AC input terminals from the 3-phase AC power grid. The 3-phase input voltage may be a voltage received by the 3 AC input terminals from the 3-phase AC power grid. The 3-phase input power may be a power received by the 3 AC input terminals from the 3-phase AC power grid.

The power supply circuitry may be connected at an input side to the AC input terminals. That is, the power supply circuitry may receive an input from the AC input terminals. The power supply circuitry may receive as an input the 3-phase AC input current from the 3 AC input terminals. Particularly, the power supply circuitry may receive as an input the 3-phase input voltage and/or the 3-phase input power from the 3 AC input terminals. The power supply circuitry may be connected at an output side to the N AC output terminals. That is, the power supply circuitry may provide an output to the N AC output terminals. The power supply circuitry may provide the N-phase AC output current to the N AC output terminals. Particularly, the power supply circuitry may provide an N-phase output voltage and/or an N-phase output power to the N AC output terminals.

The N-phase AC output current is provided to the N AC output terminals. The N-phase AC output current may be provided to the N AC output terminals in a way, that each phase of the N-phase AC output current is provided to a different output terminal of the N AC output terminals. Each phase of the N-phase AC output current may be connected to exactly one output terminal of the N AC output terminals and each output terminal of the N AC output terminals may be connected to exactly one phase of the N-phase AC output current. That is, there may be a 1:1 association between the phases of the N-phase AC output current and the N AC output terminals.

The N-phase AC output current has N phases. Particularly, the N-phase AC output current has N currents in N different phases. Respective phases of the N-phase AC output current are phase shifted with respect to each other. The respective phases of the N-phase AC output current may have an equidistant phase shift between each two neighboring phases. For an equidistant phase shift, the phase shift distance between two neighboring phases is determined as 360°/N. For example, for N = 4, or 5, the phase shift distance is 90°, or 72° respectively. A phase shift distance between each two neighboring phases may be chosen freely. That is, one or more phase shift distances between two neighboring phases may be different to phase shift distances of phase shift distances of further neighboring phases of the N phases. The power supply circuitry provides a current to each AC output terminal of the N AC output terminals, such that the power supply circuitry provides N currents to the N AC output terminals. The N currents provided to the N AC output terminals may be phase-shifted to each other.

The power supply circuitry includes N AC output terminals, N ≥ 4. The EAF has at least 4 electrodes. That is, the EAF has K electrodes, K ≥ 4. The power supply circuitry may include a same number of AC output terminals as the number of electrodes of the EAF (N = K). For example, the power supply circuitry may include 4, or 5 output terminals, and the EAF may include 4, or 5 electrodes respectively. The power supply circuitry may include a number of AC output terminals less than the number of electrodes of the EAF (N < K). Depending on the number N of AC output terminals and the number K of electrodes, the at least 4 electrodes may be connected to the N AC output terminals as follows. It is understood, that each electrode of the at least 4 electrodes only receives one phase of the N-phase AC output current.

N=K: For example, N=K=4 or N=K=5. Each electrode of the at least 4 electrodes, i.e. of the K electrodes, may be connected to one output terminal of the N output terminals. Each output terminal of the N output terminals may be connected to an electrode of the at least 4 electrodes, i.e. of the K electrodes. Each electrode of the at least 4 electrodes, i.e. the K electrodes, may be connected to exactly one output terminal of the N AC output terminals and each output terminal of the N AC output terminals may be connected to exactly one electrode of the at least 4 electrodes, i.e. of the K electrodes. The at least 4 electrodes, i.e. the K electrodes, may be connected to the N AC output terminals in a 1:1 association.

N<K. For example, N=4 and K=7, N=5 and K=6, or N=4 and K=8. For N electrodes of the at least 4 electrodes, i.e. of the K electrodes, each electrode may be connected to a different AC output terminal of the N AC output terminals. Particularly, such that N electrodes are provided with the N phases of the N AC output current. Two or more electrodes may be provided with the same phase. For example, K may be an integer multiple of N, for example 2, 3, or 4, and each phase may be provided to a same integer multiple number of electrodes, for example, 2, 3, or 4, electrodes. For example, for N = 4 and K = 8 an integer would be 2 and each phase may be provided to 2 electrodes. A phase of the N-phase AC output current may be provided to one or more electrodes. Particularly one or more phases of the N-phase AC output current may be provided to one or more electrodes Each phase of the N-phase AC output current may be provided to at least one electrode of the at least 4 electrodes. For example, for N = 4, and, K = 7, a first phase may be provided to 2 electrodes, a second phase to 3 electrodes, and a third and fourth phase to 1 electrode each. As another illustrative example, for N = 5 and K = 6, a first phase may be provided to 2 electrodes, and a second to fifth phase may be provided to 1 electrode each.

The N-phase AC output terminals may be connected directly to the at least 4 electrodes. That is, there is no power electric element provided between the N-phase AC output terminals and the at least 4 electrodes, which may alter a current, a voltage, and/or power. For example, there is no transformer provided between the N-phase AC output terminals and the at least 4 electrodes. The N-phase AC output terminals may be connected indirectly to the at least 4 electrodes. That is, there is a power electric element provided between the N-phase AC output terminals and the at least 4 electrodes, which may alter a current and/or power. For example, there may be provided a transformer between the N-phase AC output terminals and the at least 4 electrodes.

According to the invention, the power supply circuitry includes at least one converter with a DC link having a DC buffer. The DC buffer may be configured to store and/or release electrical energy. The DC buffer may be configured to compensate power fluctuations. For example, the DC buffer may be configured to compensate fluctuations in the AC power grid and/or the power usage of the AC electric arc furnace. Particularly, the DC buffer may be configured to compensate fluctuations in the 3-phase AC input current, the 3-phase input voltage and/or the 3-phase input power. Advantageously, the DC buffer improves the stability of the N-phase AC output current provided by the power supply system according to the present invention.

The power supply circuitry may include two or more converters with a DC link having a DC buffer. The at least one converter may comprise two or more converters with a DC link having a DC buffer. For example, 2, 3, 4, 5, 6, or more converters. The two or more converters may be identical to each other. The two or more converters may be provided in parallel to each other. Providing the two or more converters in parallel to each other advantageously reduces a power provided to each converter. Particularly a power which has to be converted by each of the two or more converters. For example, the at least one converter receives an input current, for example, the 3-phase AC input current, particularly an input power, for example, the 3-phase input power. When having two or more converters, the input current, particularly the input power, can be distributed, particularly evenly distributed, over the two or more converters. Advantageously, a load for each converter is reduced, this may result in reduced stress for each converter. Each of the two or more converters can be designed smaller.

In further embodiments, the DC buffer includes an element selected from the group consisting of capacitor, supercapacitor, battery, flywheel, gravity energy storage, compressed-air energy storage (CAES), and a combination thereof. The DC buffer, particularly the elements selected from the group above may be for storing and releasing an electrical energy. The DC buffer may include any other suitable storage element which can be interfaced to a DC voltage, particularly for storing and releasing an electrical energy.

The DC buffer may be charged by the 3-phase AC input current. Particularly may be charged by the 3-phase AC input current provided by the power grid 105. Particularly, the DC buffer may be charged by the 3-phase input voltage and/or the 3-phase input power received from the power grid 105. The DC buffer may store a stored electrical energy. The DC buffer may provide a current that is provided to the power supply circuitry. The DC buffer may release stored electrical energy to the power supply circuitry. The DC buffer may release the stored electrical energy in order to compensate fluctuations in the power supply circuitry. For example, fluctuations in the 3-phase AC input current provided by the power grid 105, particularly fluctuations in the 3-phase power provided by the power grid and/or fluctuations in the power usage of the EAF. The DC buffer may reduce fluctuations in the N-phase AC output current provided to the N AC output terminals. Particularly, reduce fluctuations in the N-phase output power provided to the N AC output terminals.

In some embodiments, which can be combined with further embodiments described herein, a renewable energy source is connected to the DC buffer for providing electric power from the renewable energy source to the DC buffer. The renewable energy source may be connected directly to the DC buffer. That is, there is no power electronic element and/or transformer provided between the renewable energy source and the DC buffer, which may alter a current, a voltage, and/or power provided by the renewable energy source to the DC buffer. For example, there is no transformer provided between the renewable energy source and the DC buffer. The renewable energy source may be connected indirectly with the DC buffer. That is, there is a power electronic element and/or a transformer provided between the renewable energy source and the DC buffer, which may alter a current, a voltage, and/or power provided by the renewable energy source to the DC buffer. For example, there is a transformer provided between the renewable energy source and the DC buffer. For example, there is a solid-state transformer provided between the renewable energy source and the DC buffer.

The renewable energy source may provide at least a part of the stored energy stored in the DC buffer. The renewable energy source may charge the DC buffer. The renewable energy source may be a solar energy source, a wind energy source, a geothermal energy source, a hydropower energy source, an ocean energy source, a bioenergy source, or any combination thereof.

In some embodiments the at least one converter may be configured to output an N-phase AC current, in particular to convert a 3-phase AC current to the N-phase AC current, particularly wherein the inverter is configured to output the N phase AC current.

The N-phase AC current provided by the at least one converter may be fed to the output current. Particularly, each converter of the at least one converter may provide an N-phase AC current that may be fed to the output current. The N phase AC current provided by the at least one converter may correspond to the N-phase AC output current provided to the at least 4 electrodes. Particularly, the sum of the N-phase currents provided by each of the at least one converter may correspond to the N-phase AC output current provided to the at least 4 electrodes. The 3-phase AC current may be taken from the 3-phase AC input current. Particularly, the 3-phase AC current for each converter of the at least one converter may be taken from the 3-phase AC input current. The 3-phase AC current may correspond to the 3-phase AC input current.

In some embodiments, the at least one converter is configured to output an AC current having an output frequency, the output frequency being adjustable independently of the grid frequency. Particularly, an inverter of the at least one converter may be configured to output the AC current having the output frequency, the frequency being adjustable independently of the grid frequency.

In some embodiments, which can be combined with further embodiments described herein, the at least one converter includes a rectifier and an inverter, and the DC link is connected to an output of the rectifier and connected to an input of the inverter. The rectifier may be connected between the 3 AC input terminals and the DC link. The inverter may be connected between the DC link and the N AC output terminals. Particularly a respective converter, or each converter, of the at least one converter includes the DC link, the rectifier, and the inverter, respectively. Particularly, the at least one converter may be two or more converters and the two or more converters may be identical to each other. Each of the two or more converters may include a DC link, a rectifier, and an inverter.

The outputs of the first rectifier and the input of the first inverter may be connected. A first terminal of the output of the first rectifier may be connected to a first terminal of the input of the first inverter forming a first connection. A second terminal of the output of the first rectifier may be connected to a second terminal of the input of the first inverter forming a second connection. The first DC link may be formed by the first connection and the second connection. The DC link may include one or more DC buffers. Particularly one or more of the DC buffers that include an element selected from the group consisting of capacitor, supercapacitor, battery, flywheel, gravity energy storage, compressed-air energy storage (CAES), and a combination thereof being described above. The one or more DC buffers may be provided in the DC link. The one or more DC buffers may be provided in series to each other and/or in parallel to each other. The one or more DC buffers may be provided in a bridge between the first connection and the second connection. For example, the DC link may include 2 capacitors which are provided in series between the first connection and the second connection. For example, the DC link may include a first capacitor, a second capacitor provided in series to the first capacitor, and a battery provided in parallel to the first capacitor and the second capacitor.

In some embodiments, which can be combined with further embodiments described herein, the power supply circuitry further includes an AC arc furnace transformer. The AC arc furnace transformer can be a 3-phase transformer. The AC arc furnace transformer can be an N-phase transformer, N ≥ 4. For example, the AC arc furnace transformer can be a 4-phase transformer or a 5-phase transformer. The AC arc furnace transformer may include multiple transformers, wherein the multiple transformers transform 3 or more phases, such as N phases, N ≥ 4. For example, the AC arc furnace transformer may include 3 or N single phase transformers. Each single-phase transformer of the N single phase transformers may transform one phase, such that the N single phase transformers transform 3 phases. In some embodiments, the AC arc furnace transformer is connected in series to the at least one converter.

The AC arc furnace transformer has a primary side and a secondary side. The primary side may be connected, directly or indirectly, to the 3 AC input terminals. The primary side may be a high voltage side. The primary side may be a low current side. The secondary side may be connected, directly, or indirectly, to the N AC output terminals. The secondary side may be a low voltage side. The secondary side may be a high current side.

In some embodiments, the at least one converter includes a first converter, the first converter comprising the DC link being a first DC link, the rectifier being a first rectifier, and the inverter being a first inverter. The rectifier may be an active rectifier. The active rectifier may comprise semiconductor switches, i.e. power semiconductor devices, for example, IGCT's, IGBTs or SiC Mosfet's.. The active rectifier may be configured to actively improve the power quality of a power seen by the 3-phase AC power grid. The first DC link may include an active front end. The active front end may include the active rectifier. The rectifier may be a passive rectifier. The passive rectifier may be a diode rectifier. The DC link may comprise a passive front end. The passive front end may include the passive rectifier. The first converter may be configured to output an N-phase AC output current, particularly to output the N-phase AC output current. The first converter may be configured to output an N-phase power, particularly to output the N-phase output power. In some embodiments the at least one converter may include two or more first converters, for example, 2, 3, 4, 5, 6, or more first converters. The two or more first converters may be identical to each other. Each of the two or more first converters may include a first DC link, a first rectifier, and a first inverter. The two or more first converters may be provided in parallel. The N-phase current provided by each of the two or more first converters may be added together. For example, the N-phase current provided by each of the two or more first converters may be added together to provide the N-phase AC output current. Particularly, the N-phase power provided by the two or more first converters may be added together. Particularly added together to provide the N-phase output power. Advantageously, by having two or more first converters, the current and/or the power that has to be provided by each of the first converters can be decreased. Each converter of the two or more first converters can be designed smaller. That is, a physical size of each first converter of the two or more first converters can be reduced.

In some embodiments the first converter may be connected in series to the AC arc furnace transformer and provided on a secondary side of the AC arc furnace transformer. The first converter may be connected to the N AC output terminals, particularly the first inverter may be connected to the N AC output terminals. The first converter may be connected directly to the N AC output terminals. That is, there is no power electronic element and/or transformer provided between the first converter and the N AC output terminals, which may alter a current and/or power. For example, there is no transformer provided between a first converter and the N-phase AC output terminals. The first converter may be connected indirectly to the N AC output terminals. That is, there is a power electronic element and/or a transformer provided between the first converter and the N AC output terminals, which may alter a current and/or power. For example, there is a transformer provided between the first converter and the N-phase AC output terminals.

In some embodiments, the first converter may be connected in series to the AC arc furnace transformer and provided on a primary side of the AC arc furnace transformer. The AC arc furnace transformer may be connected at a secondary side to the N AC output terminals. Particularly, the AC arc furnace transformer is an N-phase transformer or N single-phase transformers. The AC arc furnace transformer may be connected directly to the N AC output terminals. That is, there is no power electronic element and/or transformer provided between the AC arc furnace transformer and the N AC output terminals, which may alter a current and/or power. For example, there is no transformer provided between the AC arc furnace transformer and the N-phase AC output terminals. The AC arc furnace transformer may be connected indirectly to the N AC output terminals. That is, there is a power electronic element and/or a transformer provided between the AC arc furnace transformer and the N AC output terminals, which may alter a current and/or power. For example, there is a transformer provided between AC arc furnace transformer and the N-phase AC output terminals.

In some embodiments, the power supply circuitry includes a line interface transformer, LIT, configured to transform a 3 phase AC current to an N phase AC current.

In some embodiments, which can be combined with further embodiments described herein, the LIT may be connected in series to the AC arc furnace transformer and provided on a primary side of the AC arc furnace transformer. The LIT may be provided in a grid connection that connects the primary side of the AC arc furnace transformer to the AC input terminals. Particularly, the at least one converter may include a universal power flow controller, UPFC, provided in an auxiliary connection, wherein the auxiliary connection is a connection between the AC input terminals and the AC arc furnace transformer on the primary side. The at least one converter may comprise one or more UPFCs. The one or more UPFCs may be provided in one or more auxiliary connections. The auxiliary connection may be coupled to an input of the LIT and to an output of the LIT. The auxiliary connection may be coupled to the grid connection at an input side of the LIT and to the grid connection at an output side of the LIT. The auxiliary connection may be coupled in series to the output of the LIT, particularly to the grid connection at an output side of the LIT. The auxiliary connection may be coupled to the input of the LIT, particularly to the grid connection, in a way to connect an input of the UPFC to the input of the LIT, particularly to the grid connection. The auxiliary connection may be coupled to the output of the LIT, particularly to the grid connection, in a way to connect an output of the UPFC in series to the output of the LIT, particularly to the grid connection. An output, for example, a current and/or a power, of the UPFC may be feed in series to an output of the LIT, particularly fed into the grid connection. The coupling of the auxiliary connection may be via two coupling transformers. At least one of the two coupling transformers may be a booster transformer. Advantageously, the UPFC may be configured to compensate fluctuations in the power grid and/or the power usage of the electric arc furnace. Particularly, the UPFC may compensate fluctuations in a current and/or power provided by the LIT. The UPFC may improve a power quality of a power provided by the power supply system, particularly of a power provided to the at least 4 electrodes through the N AC output terminals.

In some embodiments, the LIT may be connected in series to the AC arc furnace transformer and provided on a secondary side of the AC arc furnace transformer. Particularly, the AC arc furnace transformer may be connected on a primary side to the AC input terminals through a grid connection, and the at least one converter may include an UPFC provided in an auxiliary connection. The at least one converter may comprise one or more UPFCs. The one or more UPFCs may be provided in one or more auxiliary connections. The auxiliary connection may be coupled to the grid connection. The auxiliary connection may be coupled to the grid connection to connect an output of the UPFC in series to the grid connection. The auxiliary connection may be coupled to the grid connection to connect an input of the UPFC to the grid connection. An output, for example, a current and/or a power, of the UPFC may be fed in series into the grid connection. The auxiliary connection may be a connection between the AC input terminals and the AC arc furnace transformer on the primary side. The coupling of the auxiliary connection may be via two coupling transformers. At least one of the two coupling transformers may be a booster transformer. Advantageously, the UPFC may be configured to compensate fluctuations in a current and/or power provided by the LIT. The UPFC may improve a power quality of a power provided by the power supply system, particularly of a power provided to the N electrodes through the N AC output terminals.

In some embodiments, which can be combined with further embodiments described herein, the UPFC may be provided on the secondary side of the AC arc furnace transformer. The arrangement of the UPFC on the secondary side of the AC arc furnace transformer may be similar to the arrangement of the UPFC on the primary side. Particularly, the UPFC may be provided in an auxiliary connection.

In some embodiments, the universal power flow controller includes the DC link being a second DC link, a rectifier being a second rectifier, and an inverter being a second inverter. In some embodiments, the at least one converter may include the first converter and the UPFC. Particularly, the first converter may have a passive frontend. In some embodiments the first converter may have a passive front end and the at least one converter includes the first converter and the UPFC. In some embodiments, the first converter may have a passive front end and the at least one converter includes the first converter and the power supply circuitry includes a power quality correction equipment. The power quality correction equipment may be a STATCOM, an SVC, or a combination thereof.

In some embodiments, the power supply circuitry includes a 3-to-N-phase coil system having magnetic coupling and configured to output an N-phase AC output current.

According to the invention, a method for providing a power to an AC electric arc furnace having at least 4 electrodes is provided. The method includes providing a 3-phase AC current from a 3-phase AC power grid to a power supply circuitry of an electric arc furnace power supply system, transforming the 3-phase AC current to an N-phase AC output current, wherein respective phases of the N-phase AC output current are phase shifted with respect to each other, providing the N-phase AC output current to the at least 4 electrodes.

In some embodiments, the providing the N-phase AC output current to the at least 4 electrodes includes providing to each electrode a different phase of the N-phase AC output current. Particularly, such that each electrode is provided with at least one phase that is not provide to another electrode of the at least 4 electrodes.

In some embodiments the electric arc furnace power supply system is according to embodiments described herein.

Those skilled in the art will recognise additional features and advantages upon reading the following detailed description, and upon viewing the accompanying drawings.

### Brief description of the drawings

So that the manner in which the above recited features of the present disclosure can be understood in detail, a more particular description of the disclosure, briefly summarized above, may be had by reference to embodiments. The accompanying drawings relate to embodiments of the disclosure and are described in the following:
Fig. 1 shows a schematic diagram of an electric arc furnace power supply system for an AC electric arc furnace according to embodiments described herein.
Fig. 2a shows a schematic diagram of a power supply circuitry having a first converter
Fig. 2b shows a schematic diagram of a power supply circuitry having multiple first converter
Figs. 3a and 3b show a schematic diagram of a power supply circuitry having a first converter and an AC arc furnace transformer
Figs. 4a, 4b, and 4c show a schematic diagram of a power supply circuitry having a LIT and an AC arc furnace transformer
Fig. 5 shows a schematic diagram of a first inverter provided in a power supply circuitry

### Detailed description of the drawings

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

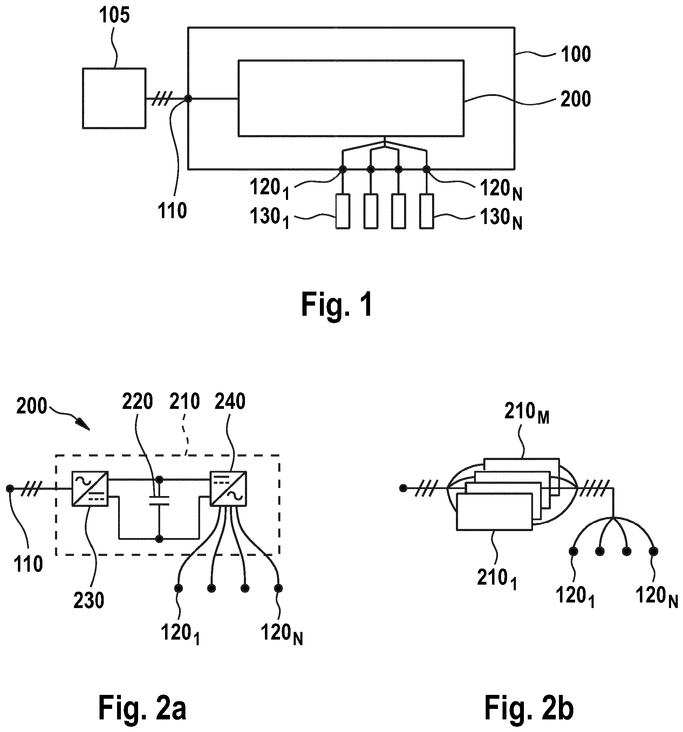

Fig. 1 shows a schematic diagram of an electric arc furnace power supply system 100 for an AC electric arc furnace according to embodiments described herein. The electric arc furnace power supply system 100 includes 3 AC input terminals 110, N AC output terminals 120_{N}, N ≥ 4, and a power supply circuitry 200. The 3 AC input terminals 110 are configured to be connected to a 3-phase AC power grid 105. The N AC output terminals 120_{N} may be connected to at least 4 electrodes 130_{N} of the electric arc furnace.

The 3-phase AC power grid 105 may be a utility grid. The 3-phase AC power grid 105 may be LV grid, a MV grid, a HV grid, or an extra high voltage grid. The 3 AC input terminals 110 may be connected directly to the 3-phase AC power grid 105. For example, the 3 AC input terminals 110 may be connected directly to a LV grid or a MV grid. A grid transformer may be provided to be connected to the power grid 105. The 3 AC input terminals may be connected indirectly to the AC power grid 105 through the grid transformer. For example, the 3 AC input terminals may be connected to the AC power grid 105 being a LV grid, a MV grid, a HV grid, or an extra high voltage grid trough the grid transformer. The 3-phase AC power grid 105 may provide a 3-phase input current to the 3 AC input terminals. The 3 phases of the 3-phases AC input current are illustrated by the 3 parallel lines crossing the connection lines between the power grid 105 and the 3 AC input terminals. Throughout the figures, similarly 4 parallel lines represent an N-phase current.

As shown in Fig. 1, each AC output terminal of the N AC output terminals 120_{N} is connected to exactly one electrode of the at least 4 electrodes 130_{N}. In the embodiment of Fig. 1, the electric arc furnace power supply system comprises a same number N of output terminals as the electric arc furnace comprises electrodes. In other embodiments, the electric arc furnace may comprise more electrodes than the power supply has output terminals.

The power supply system 200 is connected to the 3 AC input terminals for receiving a 3-phase AC input current. The power supply system 200 receives the 3-phase AC input current from the power grid via the 3 AC input terminals. The power supply system 200 is connected to the N AC output terminals for providing an N-phase AC output current to the N AC output terminals. The power supply system 200 may provide the N-phase AC output current to the at least 4 electrodes 130_{N} through the N AC output terminals 120_{N}.

Fig. 2a is a schematic diagram of a power supply circuitry according to embodiments described herein. The power supply circuitry comprises a first converter 210. The first converter 210 comprises a first DC buffer 220, a first rectifier 230, and a first inverter 240. The first DC buffer 220 is provided in a DC link between the first rectifier 230 and the first inverter 240. The first rectifier 230 is connected to the 3 AC input terminals. Particularly, connected such that the first rectifier 230 is connected at an input side of the first rectifier to the 3 AC input terminals. The first rectifier 230 may receive as an input a 3-phase AC current provided by the 3 AC input terminal. The first inverter 240 is connected to the N AC output terminals 120_{N}. Particularly, connected such that first inverter 240 provides as an output the N-phase AC output current to the N AC output terminals.

A first connection may be formed between a first output of the first rectifier 230 and a first input of the first inverter 240. A second connection may be formed between a second output of the first rectifier 230 and a second input of the first inverter 240. The first connection and the second connection may form the first DC link therebetween. The first DC buffer 220 may be provided in a bridge between the first connection and the second connection.

In Fig. 2a the first DC buffer is shown as a capacitor. In further embodiments, the DC link may comprise one or more DC buffers. The DC buffers may be selected from the group consisting of capacitor, supercapacitor, battery, flywheel, gravity energy storage, compressed-air energy storage (CAES), and a combination thereof. The one or more DC buffers may be provided in series to each other and/or in parallel to each other. For example, the DC buffer may comprise two capacitors in series bridged between the first connection and the second connection of the DC link.

Fig. 2b shows an embodiment of a power supply circuitry comprising more than one first converter 210. The power supply circuitry in Fig. 2b comprises M first converter 210. The M first convert 210 are provided in parallel to each other. Each first converter 210 of the M first converter receives as an input a 3-phase AC current. The total current provided to the M first converter 210 corresponds to the 3-phase AC input current. The M first converter 210 may be identical to each other. Each first converter of the M first converter may receive a 3-phase AC current equal to the 3-phase AC input current divided by M, i.e. one m^{th} of the 3-phase AC input current. Each first converter 210 of the M first converter provides an N-phase AC current. The M N-phase AC currents provided by the M first converter 210 is added to the N-phase AC output current. Particularly, the N-phase AC output current corresponds to the summed-up M N-phase AC currents provided by the M first converter 210.

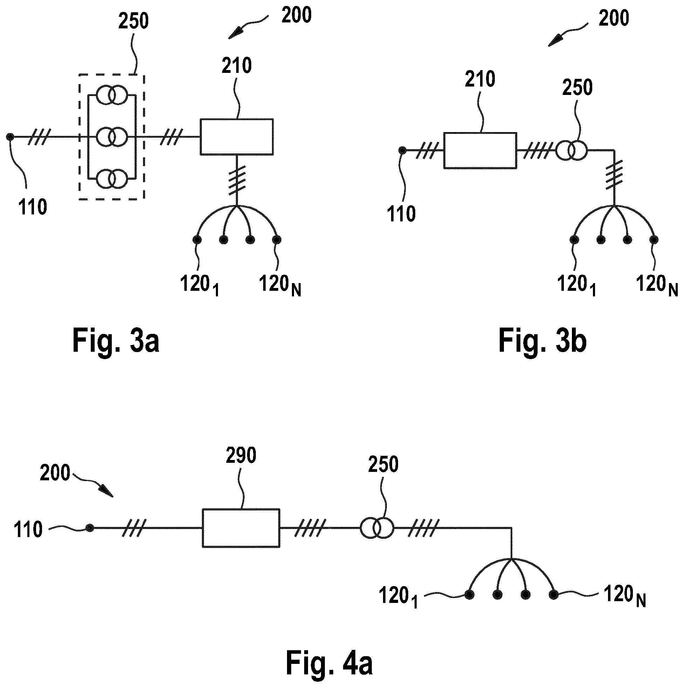

The power supply circuitry may comprise a transformer, such as an AC arc furnace transformer 250. Figs. 3a and 3b show a power supply circuitry 200 having a first converter 210 and an AC arc furnace transformer 250. In Fig. 3a, the first converter 210 is provided on a secondary side of the AC arc furnace transformer 250. The AC arc furnace transformer 250 is connected to the 3 AC input terminals on a primary side of the AC arc furnace transformer. The primary side of the AC arc furnace transformer is a high voltage, low current side. The AC arc furnace transformer 250 is a 3-phase transformer configured to transform a 3-phase AC current, for example, the 3-phase AC input current received from the 3 AC input terminals.

The AC arc furnace transformer is connected at the secondary side to the first converter 210. The secondary side of the AC arc furnace transformer is a low voltage, high current side. The first converter 210 is connected to a low voltage, high current side of the AC arc furnace transformer.

In some embodiments, the AC arc furnace transformer may comprise several single phase transformers. Each single phase transformer may be configured to transform a single phase of an AC current. Particularly, the AC arc transformer may comprise 3 single phase transformers or N single phase transformers. As shown in Fig. 3a, the AC arc furnace transformer comprises 3 single phase transformers. It is understood that the further embodiments described herein having an AC arc furnace transformer may similarly comprise 3 or N single phase transformers.

In Fig. 3b, a power supply circuitry is shown having the first converter 210 provided on a primary side of the AC arc furnace transformer. The AC arc furnace transformer is connected on a secondary side to the N AC output terminals. The N AC output terminals are connected to a low voltage, high current side of the AC arc furnace transformer. The AC arc furnace transformer is connected to the first converter 210 on a primary side. Particularly, the AC arc furnace transformer receives on the primary side an output of the first converter 210. The output of the first converter 210 is an N-phase AC current. The AC arc furnace transformer is an N-phase transformer. While not shown in Fig. 3b, the AC arc furnace transformer may comprise one or more single phase transformer, for example N single phase transformer. Particularly comprise a single-phase transformer for each phase of the N-phase current. While not shown in Figs. 3a and 3b, the power supply circuitry 200 may comprise M first converter 210 provided in parallel to each other, as shown in Fig. 2b.

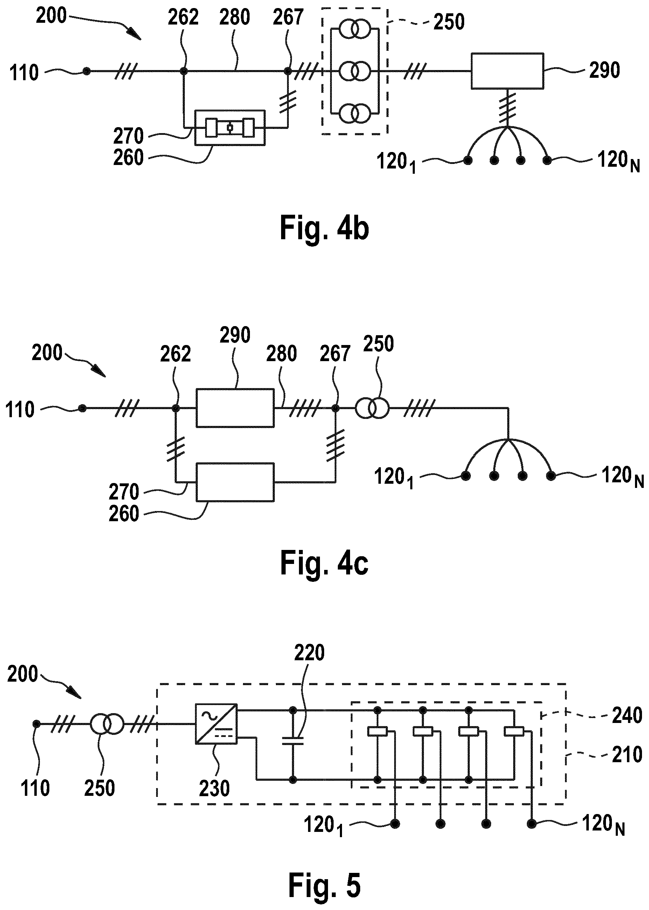

Figs. 4a, 4b and 4c show a power supply circuitry 200 comprising an AC arc furnace transformer 250 and a line interface transformer (LIT) 290. The line interface transformer may be configured to transform a 3 phase AC current to an N phase AC current. The LIT 290 may be provided in series to the arc furnace transformer 250.

In Fig. 4a, the LIT 290 is provided on a primary side of the AC arc furnace transformer. The LIT 290 receives as an input the 3-phase AC input current from the power grid 105 via the 3 AC input terminals 110. The LIT 290 provides as an output an N-phase AC current. For example, the LIT 290 may provide as an output a 4-phase AC current or a 5-phase AC current. The N-phase AC current is provided as an input to the AC arc furnace transformer at a primary side of the AC arc furnace transformer. The AC arc furnace transformer is an N phase transformer, for example a 4-phase transformer or a 5-phase transformer. The AC arc furnace transformer may comprise N single-phase transformer, for example, 4 single-phase transformer, or 5 single-phase transformer. The AC arc furnace transformer is connected to the N AC output terminals. The AC arc furnace transformer provides the N-phase AC output current to the N AC output terminals.

In further embodiments not shown in the figures, the LIT 290 may be provided on the secondary side of the AC arc furnace transformer 250. The AC arc furnace transformer may be a 3-phase transformer and may receive as an input on the primary side the 3-phase AC input current from the 3 AC input terminals. The LIT 290 may receive a 3-phase current from the secondary side of the AC arc transformer and may provide an N-phase AC current. Particularly, the LIT 290 may be connected to the N AC output terminals and provide the N-phase AC output current to the N AC output terminals. In Fig. 4b the LIT 290 provided on the secondary of the AC arc furnace transformer is illustrated, wherein the power supply circuitry comprises further components provided on the primary side of the AC arc furnace transformer.

Fig. 4b shows an embodiment of a power supply circuitry having the LIT 290 on the secondary side of the AC arc transformer 250. The power supply circuitry further includes a universal power flow controller 260, an auxiliary connection 270, and a grid connection 280 provided on the primary side of the AC arc transformer. The grid connection 280 is connecting the 3 AC input terminals to the primary side of the AC arc furnace transformer 250. The universal power flow controller 260 is provided in the auxiliary connection 270. An input side of the universal power flow controller is connected to the grid connection 280. An output side of the universal power flow controller is connected in series to the grid connection 280. The universal power flow controller may be connected to the grid connection 280 through a first coupling transformer 262, particularly at least one parallel transformer, and a second coupling transformer 267, particularly at least one series transformer. The second coupling transformer 267 may be booster transformer. The second coupling transformer 267 may coupled to an output side of the UPFC in series to the grid connection 280. An output of the UPFC, for example, a current and/or a power, may be provided, through the coupling transformer 267, in series into the grid connection 280.

The AC arc furnace transformer 250 receives at a primary side a first current from the grid connection 280, particularly a first power, and a second current from the auxiliary connection 270, particularly a second power. The UPFC 260 provided in the auxiliary connection 270 may provide the second current, particularly the second power. The output of the UPFC 260 is connected in series to the grid connection. The UPFC 260 may feed a current, particularly a power, into the grid connection. The AC arc furnace transformer receives a total current at the primary side equal to the first current provided by the grid connection 280 and the second current provided by the auxiliary connection 270, particularly provided by the UPFC 260. Particularly, the AC arc furnace transformer receives a total power at the primary side equal to the first power provided by the grid connection 280 and the second power provided by the auxiliary connection 270, particularly provided by the UPFC 260. The first current provided by the grid connection 280 may be subject to fluctuations. A power consumption of the AC electric arc furnace may lead to fluctuations in the first current. Further, the 3-phase AC input current provided by the AC power grid 105 may have fluctuations. Particularly, a first power provided through the grid connection 280 may be subject to fluctuations. The UPFC 260 may be configured to compensate fluctuations in the first current. Particularly compensate fluctuation in the first power provided by the grid connection 280.

The UPFC may comprise a second rectifier, a second inverter, and a second DC link having a second DC buffer. A third connection may be formed between a third output of the second rectifier 230 and a third input of the second inverter 240. A fourth connection may be formed between a fourth output of the second rectifier 230 and a fourth input of the second inverter 240. The third connection and the fourth connection may form the second DC link therebetween. The second DC buffer may be provided in a bridge between the third connection and the fourth connection.

The second DC buffer may store electrical energy. The second DC buffer may release electrical energy. For example, the second DC buffer may store and release electrical energy to compensate fluctuations in the first current provided by the grid connection 280, particularly to compensate fluctuations in the first power provided by the grid connection 280.

Fig. 4c shows an embodiment of a power supply circuitry 200 wherein the LIT 290 is provided in the grid connection 280. The universal power flow controller 260 is provided in parallel to the LIT 290. The LIT 290 receives as an input a 3-phase AC current and provides as an output a first N-phase AC current. The UPFC 260 receives as an input a 3-phase AC current and provides as an output a second N-phase AC current. The first N-phase AC current provided by the LIT may be subject to fluctuations. The UPFC 260 may compensate the fluctuation in the first N-phase AC current provided by the LIT 290.

In Fig. 4b the AC arc furnace transformer 250 is a 3 phase AC arc furnace transformer. The AC arc furnace transformer is shown as 3 single phase AC arc furnace transformers. It is understood that the AC arc furnace transformers in Figs. 4a, 4b, and 4c may be provided as 3-phase or N-phase AC arc furnace transformers or comprise 3 or N single phase AC arc furnace transformer for a 3-phase or N-phase AC current.

Fig. 5 shows a power supply circuitry 200 having an AC arc furnace transformer 250 and a first inverter 210 provided on a secondary side of the AC arc furnace transformer, similar to the embodiment shown in Fig. 3a. The first converter comprises the first rectifier 230, the first inverter 240, and a first DC link having a DC buffer 220 provided between the first rectifier 230 and the first inverter 240. The first inverter 240 is shown in more detail. The first inverter 240 comprises N active elements provided in parallel to each other. The N active elements may be semiconductor power electronic elements, such as DC to AC converters. Each active element of the N active elements may be configured to transform a DC current to an AC current. The N active elements may be operated independent from each other, such that each active element of the N active elements can provide one phase of an N-phase AC current. The N active elements may be configured to freely set a phase-shift between the N phases of the N-phase AC current. The N active elements may be configured to output an AC current having an output frequency, the output frequency being adjustable independently of a grid frequency. The grid frequency being a frequency of the AC power grid, particularly a frequency of the 3-phase AC input current.

While the foregoing is directed to embodiments, other and further embodiments may be devised without departing from the basic scope, and the scope is determined by the claims that follow.

## Claims

1. An electric arc furnace power supply system (100) for an AC electric arc furnace, EAF, having at least 4 electrodes (130_{N}), the EAF power supply system comprising:
3 AC input terminals (110) configured to be connected to a 3-phase AC power grid (105);
N AC output terminals (120_{N}), N ≥ 4, configured to be connected to the at least 4 electrodes; and
a power supply circuitry (200) connected to the AC input terminals (110) for receiving a 3-phase AC input current from the power grid (105) via the AC input terminals, and connected to the AC output terminals (120_{N}) for providing an N-phase AC output current to the electrodes via the AC output terminals, wherein respective phases of the N-phase AC output current provided at the N AC output terminals are phase shifted with respect to each other;
**characterized in that** the power supply circuitry comprises at least one converter (210, 260) with a DC link having a DC buffer (220).

2. The EAF power supply system according to claim 1, wherein the DC buffer (220) comprises an element selected from the group consisting of capacitor, supercapacitor, battery, flywheel, gravity energy storage, compressed-air energy storage (CAES), and a combination thereof, and/or wherein a renewable energy source is connected to the DC buffer for providing electric power from the renewable energy source to the DC buffer.

3. The EAF power supply system according to any one of claims 1 or 2, wherein the at least one converter (210, 260) is configured to output an N-phase AC current, in particular to convert a 3-phase AC current to the N-phase AC current, particularly wherein the inverter (240) is configured to output the N phase AC current, and/or wherein the at least one converter (210) is configured to output an AC current having an output frequency, the output frequency being adjustable independently of the grid frequency.

4. The EAF power supply system according to any one of claims 1 through 3, wherein the at least one converter (210, 260) comprises a rectifier (230) and an inverter (240), and wherein the DC link is connected to an output of the rectifier (230) and connected to an input of the inverter (240).

5. The EAF power supply system according to any one of the preceding claims, wherein the power supply circuitry further comprises an AC arc furnace transformer (250), particularly wherein the power supply circuitry further comprises an AC arc furnace transformer, wherein the AC arc furnace transformer (250) is connected in series to the at least one converter (210, 260).

6. The EAF power supply system according to any one of claims 4 through 5, wherein the at least one converter (210, 260) comprises a first converter (210), the first convertor comprising the DC link (220) being a first DC link, the rectifier (230) being a first rectifier, and the inverter (240) being a first inverter.

7. The EAF power supply system according to claim 6 being dependent on claim 5, wherein the first converter (210) is connected in series to the AC arc furnace transformer and provided on a secondary side of the AC arc furnace transformer, and the first converter (210) is connected to the N AC output terminals, particularly the first inverter (240) is connected to the N AC output terminals.

8. The EAF power supply system according to claim 6 being dependent on claim 5, wherein the first converter (210) is connected in series to the AC arc furnace transformer and provided on a primary side of the AC arc furnace transformer, and the AC arc furnace transformer is connected at a secondary side to the N AC output terminals.

9. The EAF power supply system according to any one of claims 1 through 5, wherein the power supply circuitry (200) comprises a line interface transformer, LIT, (290) configured to transform a 3 phase AC current to an N phase AC current.

10. The EAF power supply system according to claim 9 being dependent on claim 5, wherein the LIT (290) is connected in series to the AC arc furnace transformer and provided on a primary side of the AC arc furnace transformer, particularly wherein the at least one converter (210, 260) comprises an UPFC (260) provided in an auxiliary connection (270), wherein the auxiliary connection is a connection between the AC input terminals (110) and the AC arc furnace transformer on the primary side.

11. The EAF power supply system according to claim 9 being dependent on claim 5, wherein the LIT (290) is connected in series to the AC arc furnace transformer (250) and provided on a secondary side of the AC arc furnace transformer, particularly wherein the AC arc furnace transformer is connected on a primary side to the AC input terminals (110) through a grid connection (280), and wherein the at least one converter (260) comprises an UPFC (260) provided in an auxiliary connection (270), wherein the auxiliary connection is a connection between the AC input terminals (110) and the AC arc furnace transformer on the primary side.

12. The EAF power supply system according to claims 10 and 11, wherein the universal power flow controller comprises the DC link (220) being a second DC link, a rectifier (230) being a second rectifier, and an inverter (240) being a second inverter.

13. The EAF power supply system according to any one of the preceding claims, wherein the power supply circuitry comprises a 3-to-N-phase coil system having magnetic coupling and configured to output an N-phase AC output current.

14. A method for providing a power to an AC electric arc furnace having at least 4 electrodes, the method comprising:
providing a 3-phase AC current from a 3-phase AC power grid to a power supply circuitry (200) of an electric arc furnace power supply system (100), wherein the power supply circuitry comprises at least one converter (210, 260) with a DC link having a DC buffer (220);
transforming the 3-phase AC current to an N-phase, N≥4, AC output current, wherein respective phases of the N-phase AC output current are phase shifted with respect to each other; and
providing the N-phase AC output current to the at least 4 electrodes.

15. The method according to claim 14, wherein the providing the N-phase AC output current to the at least 4 electrodes comprises providing to each electrode a different phase of the N-phase AC output current, particularly wherein the electric arc furnace power supply system (100) is according to any one of claims 1 through 13.

## Patentansprüche

1. Elektrolichtbogenofen-Stromversorgungssystem (100) für einen AC-Elektrolichtbogenofen, EAF, mit mindestens 4 Elektroden (130_{N}), wobei das EAF-Stromversorgungssystem Folgendes umfasst:
3 AC-Eingangsanschlüsse (110), die dazu ausgelegt sind, mit einem 3-Phasen-AC-Stromnetz (105) verbunden zu werden;
N AC-Ausgangsanschlüsse (120_{N}), N ≥ 4, die dazu ausgelegt sind, mit den mindestens 4 Elektroden verbunden zu werden; und
eine Stromversorgungsschaltungsanordnung (200), die mit den AC-Eingangsanschlüssen (110) zum Empfangen eines 3-Phasen-AC-Eingangsstroms von dem Stromnetz (105) über die AC-Eingangsanschlüsse verbunden ist und mit den AC-Ausgangsanschlüssen (120_{N}) zum Liefern eines N-Phasen-AC-Ausgangsstroms an die Elektroden über die AC-Ausgangsanschlüsse verbunden ist, wobei jeweilige Phasen des an den N AC-Ausgangsanschlüssen bereitgestellten N-Phasen-AC-Ausgangsstroms zueinander phasenverschoben sind;
**dadurch gekennzeichnet, dass** die Stromversorgungsschaltungsanordnung mindestens einen Umrichter (210, 260) mit einem DC-Zwischenkreis mit einem DC-Puffer (220) umfasst.

2. EAF-Stromversorgungssystem nach Anspruch 1, wobei der DC-Puffer (220) ein Element umfasst, das aus der Gruppe bestehend aus Kondensator, Superkondensator, Batterie, Schwungrad, Schwerkraftenergiespeicher, Druckluftenergiespeicher (CAES) und einer Kombination davon ausgewählt ist, und/oder wobei eine erneuerbare Energiequelle mit dem DC-Puffer verbunden ist, um elektrische Leistung von der erneuerbaren Energiequelle an den DC-Puffer zu liefern.

3. EAF-Stromversorgungssystem nach einem der Ansprüche 1 oder 2, wobei der mindestens eine Umrichter (210, 260) dazu ausgelegt ist, einen N-Phasen-AC-Strom auszugeben, insbesondere einen 3-Phasen-AC-Strom in den N-Phasen-AC-Strom umzuwandeln, insbesondere wobei der Wechselrichter (240) dazu ausgelegt ist, den N-Phasen-AC-Strom auszugeben, und/oder wobei der mindestens eine Umrichter (210) dazu ausgelegt ist, einen AC-Strom mit einer Ausgangsfrequenz auszugeben, wobei die Ausgangsfrequenz unabhängig von der Netzfrequenz einstellbar ist.

4. EAF-Stromversorgungssystem nach einem der Ansprüche 1 bis 3, wobei der mindestens eine Umrichter (210, 260) einen Gleichrichter (230) und einen Wechselrichter (240) umfasst und wobei der DC-Zwischenkreis mit einem Ausgang des Gleichrichters (230) verbunden ist und mit einem Eingang des Wechselrichters (240) verbunden ist.

5. EAF-Stromversorgungssystem nach einem der vorhergehenden Ansprüche, wobei die Stromversorgungsschaltungsanordnung ferner einen AC-Lichtbogenofentransformator (250) umfasst, insbesondere wobei die Stromversorgungsschaltungsanordnung ferner einen AC-Lichtbogenofentransformator umfasst, wobei der AC-Lichtbogenofentransformator (250) dem mindestens einen Umrichter (210, 260) in Reihe geschaltet ist.

6. EAF-Stromversorgungssystem nach einem der Ansprüche 4 bis 5, wobei der mindestens eine Umrichter (210, 260) einen ersten Umrichter (210) umfasst, wobei der erste Umrichter den DC-Zwischenkreis (220), bei dem es sich um einen ersten DC-Zwischenkreis handelt, den Gleichrichter (230), bei dem es sich um einen ersten Gleichrichter handelt, und den Wechselrichter (240), bei dem es sich um einen ersten Wechselrichter handelt, umfasst.

7. EAF-Stromversorgungssystem nach Anspruch 6, abhängig von Anspruch 5, wobei der erste Umrichter (210) mit dem AC-Lichtbogenofentransformator in Reihe geschaltet ist und auf einer Sekundärseite des AC-Lichtbogenofentransformators bereitgestellt ist und der erste Umrichter (210) mit den N AC-Ausgangsanschlüssen verbunden ist, insbesondere der erste Wechselrichter (240) mit den N AC-Ausgangsanschlüssen verbunden ist.

8. EAF-Stromversorgungssystem nach Anspruch 6, abhängig von Anspruch 5, wobei der erste Umrichter (210) mit dem AC-Lichtbogenofentransformator in Reihe geschaltet ist und auf einer Primärseite des AC-Lichtbogenofentransformators bereitgestellt ist und der AC-Lichtbogenofentransformator an einer Sekundärseite mit den N AC-Ausgangsanschlüssen verbunden ist.

9. EAF-Stromversorgungssystem nach einem der Ansprüche 1 bis 5, wobei die Stromversorgungsschaltungsanordnung (200) einen Leitungsschnittstellentransformator, LIT, (290) umfasst, der dazu ausgelegt ist, einen 3-Phasen-AC-Strom in einen N-Phasen-AC-Strom umzuwandeln.

10. EAF-Stromversorgungssystem nach Anspruch 9, abhängig von Anspruch 5, wobei der LIT (290) mit dem AC-Lichtbogenofentransformator in Reihe geschaltet ist und auf einer Primärseite des AC-Lichtbogenofentransformators bereitgestellt ist, insbesondere wobei der mindestens eine Umrichter (210, 260) einen UPFC (260) umfasst, der in einer Hilfsverbindung (270) bereitgestellt ist, wobei die Hilfsverbindung eine Verbindung zwischen den AC-Eingangsanschlüssen (110) und dem AC-Lichtbogenofentransformator auf der Primärseite ist.

11. EAF-Stromversorgungssystem nach Anspruch 9, abhängig von Anspruch 5, wobei der LIT (290) mit dem AC-Lichtbogenofentransformator (250) in Reihe geschaltet ist und auf einer Sekundärseite des AC-Lichtbogenofentransformators bereitgestellt ist, insbesondere wobei der AC-Lichtbogenofentransformator auf einer Primärseite über eine Netzverbindung (280) mit den AC-Eingangsanschlüssen (110) verbunden ist und wobei der mindestens eine Umrichter (260) einen UPFC (260) umfasst, der in einer Hilfsverbindung (270) bereitgestellt ist, wobei die Hilfsverbindung eine Verbindung zwischen den AC-Eingangsanschlüssen (110) und dem AC-Lichtbogenofentransformator auf der Primärseite ist.

12. EAF-Stromversorgungssystem nach den Ansprüchen 10 und 11, wobei der Universal Power Flow Controller den DC-Zwischenkreis (220), bei dem es sich um einen zweiten DC-Zwischenkreis handelt, einen Gleichrichter (230), bei dem es sich um einen zweiten Gleichrichter handelt, und einen Wechselrichter (240), bei dem es sich um einen zweiten Wechselrichter handelt, umfasst.

13. EAF-Stromversorgungssystem nach einem der vorhergehenden Ansprüche, wobei die Stromversorgungsschaltungsanordnung ein 3-zu-N-Phasen-Spulensystem umfasst, das eine magnetische Kopplung aufweist und dazu ausgelegt ist, einen N-Phasen-AC-Ausgangsstrom auszugeben.

14. Verfahren zum Liefern einer Leistung an einen AC-Elektrolichtbogenofen mit mindestens 4 Elektroden, wobei das Verfahren Folgendes umfasst:
Liefern eines 3-Phasen-AC-Stroms von einem 3-Phasen-AC-Stromnetz an eine Stromversorgungsschaltungsanordnung (200) eines Elektrolichtbogenofen-Stromversorgungssystems (100), wobei die Stromversorgungsschaltungsanordnung mindestens einen Umrichter (210, 260) mit einem DC-Zwischenkreis mit einem DC-Puffer (220) umfasst;
Transformieren des 3-Phasen-AC-Stroms in einen N-Phasen-, N≥4, AC-Ausgangsstrom, wobei jeweilige Phasen des N-Phasen-AC-Ausgangsstroms zueinander phasenverschoben sind; und
Liefern des N-Phasen-AC-Ausgangsstroms an die mindestens 4 Elektroden.

15. Verfahren nach Anspruch 14, wobei das Liefern des N-Phasen-AC-Ausgangsstroms an die mindestens 4 Elektroden Liefern einer anderen Phase des N-Phasen-AC-Ausgangsstroms an jede Elektrode umfasst, insbesondere wobei das Elektrolichtbogenofen-Stromversorgungssystem (100) gemäß einem der Ansprüche 1 bis 13 ist.

## Revendications

1. Système d'alimentation de four à arc électrique (100) pour un four à arc électrique CA, EAF, ayant au moins 4 électrodes (130_{N}), le système d'alimentation électrique EAF comprenant :
3 bornes d'entrée CA (110) configurées pour être connectées à un réseau électrique CA triphasé (105) ;
N bornes de sortie CA (120_{N}) , N ≥ 4, configurées pour être connectées aux au moins 4 électrodes ; et
des circuits d'alimentation électrique (200) connectés aux bornes d'entrée CA (110) pour recevoir un courant d'entrée CA triphasé provenant du réseau électrique (105) par l'intermédiaire des bornes d'entrée CA, et connectés aux bornes de sortie CA (120_{N}) pour fournir un courant de sortie CA à N phases aux électrodes par l'intermédiaire des bornes de sortie CA, les phases respectives du courant de sortie CA à N phases fournies aux N bornes de sortie CA étant déphasées les unes par rapport aux autres ;
**caractérisé en ce que** les circuits d'alimentation comprennent au moins un convertisseur (210, 260) ayant une liaison CC présentant un tampon CC (220).

2. Système d'alimentation électrique EAF selon la revendication 1, dans lequel le tampon CC (220) comprend un élément sélectionné dans le groupe constitué par un condensateur, un supercondensateur, une batterie, un volant d'inertie, un système de stockage d'énergie par gravité, un système de stockage d'énergie à air comprimé (CAES), et une combinaison de ceux-ci, et/ou dans lequel une source d'énergie renouvelable est connectée au tampon CC pour fournir de l'énergie électrique de la source d'énergie renouvelable au tampon CC.

3. Système d'alimentation électrique EAF selon l'une quelconque des revendications 1 ou 2, dans lequel l'au moins un convertisseur (210, 260) est configuré pour fournir en sortie un courant CA à N phases, notamment pour convertir un courant CA triphasé en le courant CA à N phases, et plus particulièrement dans lequel l'onduleur (240) est configuré pour fournir en sortie le courant CA à N phases, et/ou dans lequel l'au moins un convertisseur (210) est configuré pour fournir en sortie un courant CA ayant une fréquence de sortie, la fréquence de sortie étant réglable indépendamment de la fréquence du réseau.

4. Système d'alimentation électrique EAF selon l'une quelconque des revendications 1 à 3, dans lequel l'au moins un convertisseur (210, 260) comprend un redresseur (230) et un onduleur (240), et dans lequel la liaison CC est connectée à une sortie du redresseur (230) et connectée à une entrée de l'onduleur (240).

5. Système d'alimentation électrique EAF selon l'une quelconque des revendications précédentes, dans lequel les circuits d'alimentation électrique comprennent en outre un transformateur de four à arc CA (250), en particulier dans lequel les circuits d'alimentation électrique comprennent en outre un transformateur de four à arc CA, le transformateur de four à arc CA (250) étant connecté en série à l'au moins un convertisseur (210, 260).

6. Système d'alimentation électrique EAF selon l'une quelconque des revendications 4 à 5, dans lequel l'au moins un convertisseur (210, 260) comprend un premier convertisseur (210), le premier convertisseur comprenant la liaison CC (220) étant une première liaison CC, le redresseur (230) étant un premier redresseur, et l'onduleur (240) étant un premier onduleur.

7. Système d'alimentation électrique EAF selon la revendication 6 dépendant de la revendication 5, dans lequel le premier convertisseur (210) est connecté en série au transformateur de four à arc CA et est prévu sur un côté secondaire du transformateur de four à arc CA, et le premier convertisseur (210) est connecté aux N bornes de sortie CA, et en particulier le premier inverseur (240) est connecté aux N bornes de sortie CA.

8. Système d'alimentation électrique EAF selon la revendication 6 dépendant de la revendication 5, dans lequel le premier convertisseur (210) est connecté en série au transformateur de four à arc CA et est prévu sur un côté primaire du transformateur de four à arc CA, et le transformateur de four à arc CA est connecté sur un côté secondaire aux N bornes de sortie CA.

9. Système d'alimentation électrique EAF selon l'une quelconque des revendications 1 à 5, dans lequel les circuits d'alimentation électrique (200) comprennent un transformateur d'interface de ligne, LIT, (290) configuré pour transformer un courant CA triphasé en un courant CA à N phases.

10. Système d'alimentation électrique EAF selon la revendication 9 qui dépend de la revendication 5, dans lequel le LIT (290) est connecté en série au transformateur de four à arc CA et est prévu sur un côté primaire du transformateur de four à arc CA, en particulier dans lequel l'au moins un convertisseur (210, 260) comprend un UPFC (260) prévu dans une connexion auxiliaire (270), dans lequel la connexion auxiliaire est une connexion entre les bornes d'entrée CA (110) et le transformateur de four à arc CA du côté primaire.

11. Système d'alimentation électrique EAF selon la revendication 9 qui dépend de la revendication 5, dans lequel le LIT (290) est connecté en série au transformateur de four à arc CA (250) et est prévu sur un côté secondaire du transformateur de four à arc CA, en particulier dans lequel le transformateur de four à arc CA est connecté sur un côté primaire aux bornes d'entrée CA (110) par l'intermédiaire d'une connexion de réseau (280), et dans lequel le convertisseur (260) comprend un UPFC (260) prévu dans une connexion auxiliaire (270), la connexion auxiliaire étant une connexion entre les bornes d'entrée CA (110) et le transformateur de four à arc CA du côté primaire.

12. Système d'alimentation électrique EAF selon les revendications 10 et 11, dans lequel le contrôleur universel de flux de puissance comprend la liaison CC (220) qui est une deuxième liaison CC, un redresseur (230) qui est un deuxième redresseur, et un onduleur (240) qui est un deuxième onduleur.

13. Système d'alimentation électrique EAF selon l'une quelconque des revendications précédentes, dans lequel les circuits d'alimentation électrique comprennent un système de bobines de 3 à N phases comportant un couplage magnétique et configuré pour fournir en sortie un courant de sortie CA à N phases.

14. Procédé de fourniture d'énergie à un four à arc électrique CA ayant au moins 4 électrodes, le procédé comprenant :
la fourniture d'un courant CA triphasé d'un réseau d'alimentation électrique CA triphasé à des circuits d'alimentation électrique (200) d'un système d'alimentation de four à arc électrique (100), les circuits d'alimentation électrique comprenant au moins un convertisseur (210, 260) ayant une liaison CC présentant un tampon CC (220) ;
la transformation du courant CA triphasé en un courant de sortie CA à N phases, N≥4, dans lequel des phases respectives du courant CA de sortie à N phases sont déphasées les unes par rapport aux autres ; et
la fourniture du courant de sortie CA à N phases aux au moins 4 électrodes.

15. Procédé selon la revendication 14, dans lequel la fourniture du courant CA de sortie à N phases aux au moins 4 électrodes comprend la fourniture à chaque électrode d'une phase différente du courant CA de sortie à N phases, en particulier dans lequel le système d'alimentation de four à arc électrique (100) est définie selon l'une quelconque des revendications 1 à 13.
